(19) Europäisches Patentamt / European Patent Office / Office européen des brevets

(11) **EP 3 549 368 B1**

(12) **FASCICULE DE BREVET EUROPEEN**

(45) Date de publication et mention de la délivrance du brevet:
**28.07.2021 Bulletin 2021/30**

(21) Numéro de dépôt: **17812009.3**

(22) Date de dépôt: **20.11.2017**

(51) Int Cl.:
**H04W 28/06** *(2009.01)*    **H04L 12/805** *(2013.01)*

(86) Numéro de dépôt international:
**PCT/FR2017/053178**

(87) Numéro de publication internationale:
**WO 2018/100265 (07.06.2018 Gazette 2018/23)**

(54) **PROCÉDÉ DE FRACTIONNEMENT DE MESSAGES APPLICATIFS DANS UN RÉSEAU IP**

VERFAHREN ZUM VERTEILEN VON ANWENDUNGSMELDUNGEN IN EINEM IP-NETZWERK

METHOD OF FRACTIONING APPLICATION MESSAGES IN AN IP NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2016 FR 1661718**

(43) Date de publication de la demande:
**09.10.2019 Bulletin 2019/41**

(73) Titulaire: **ORANGE**
**92130 Issy-les-Moulineaux (FR)**

(72) Inventeurs:
• **DOREE, José**
**92326 Châtillon Cedex (FR)**
• **LE ROUZIC, Jean-Claude**
**92326 Châtillon Cedex (FR)**

(56) Documents cités:
**WO-A1-2009/138480    US-A1- 2012 155 460**
**US-A1- 2016 057 070**

**Description**

La présente invention concerne les réseaux de communications de type IP (« *Internet Protocol* »), et notamment ceux parmi les réseaux IP qui sont aptes à mettre en œuvre des protocoles de contrôle de session évolués.

Plus particulièrement, la présente invention concerne les moyens mis en œuvre dans un réseau IP pour transmettre des messages applicatifs de grande longueur. Par « applicatifs », on entend que ces messages obéissent aux normes concernant une certaine application informatique.

On rappelle que les réseaux IP permettent la diffusion de données conversationnelles, dans le cadre de services tels que « Voix sur IP » (VoIP), « Partage de Contenu », ou « Messagerie Instantanée ».

On rappelle également que les protocoles de contrôle de session évolués, tels que le protocole SIP (initiales des mots anglais « *Session Initiation Protocol* » signifiant « Protocole d'Initiation de Session »), utilisent des messages dits de « signalisation », qui sont des messages permettant à un terminal de demander une connexion avec un autre terminal, ou également des messages signalant qu'une ligne téléphonique est occupée, ou signalant que le téléphone appelé sonne, ou encore signalant que tel téléphone est connecté au réseau et peut être joint de telle ou telle manière.

Le protocole SIP a été défini par l'IETF (*Internet Engineering Task Force*) dans le document RFC 3261. Ce protocole permet l'établissement, la modification et la terminaison de sessions multimédia dans un réseau utilisant le protocole IP. Le protocole SIP a ensuite été étendu notamment dans le document RFC 3265 ; cette extension définit des procédures de notification d'événements.

Le protocole SIP est utilisé en particulier dans les infrastructures réseau de type IMS (initiales des mots anglais « *IP Multimedia Subsystem* » signifiant « Sous-système Multimédia sur IP »). L'IMS a été défini par l'organisme de normalisation 3GPP (« *Third Generation Partnership Project* ») et TISPAN (« *Telecommunications and Internet Converged Services and Protocols for Advanced Networking* »). C'est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation des ressources au niveau du réseau de transport des flux multimédias. Grâce à cette architecture, les opérateurs réseau peuvent commodément mettre en œuvre une politique de gestion, fournir une Qualité de Service prédéterminée, et calculer les montants à facturer aux clients. L'IMS permet actuellement d'accéder à des services de type téléphonie, visiophonie, Présence et Messagerie Instantanée, dont elle gère aussi l'interaction.

Un problème fondamental qui se pose dans les réseaux IP au niveau de la couche réseau (couche 3 du modèle OSI) est que les routeurs ne peuvent transmettre un paquet de données en un seul bloc que si la longueur de ce paquet ne dépasse pas une certaine valeur maximum, appelée « MTU » (initiales des mots anglais « *Maximum Transmission Unit* » signifiant « Taille Maximum de Transmission »). Dans certains systèmes (notamment ceux conformes à la norme IPv6), le comportement par défaut est de détruire purement et simplement les paquets trop longs. D'autres systèmes possèdent des moyens pour fractionner un paquet trop long au niveau de la couche réseau, de manière à obtenir plusieurs fragments qui sont transmis l'un après l'autre ; un tel fractionnement est appelé « fragmentation ». Un exemple se trouve dans US2016/057070.

Or il est bien connu (cf. par exemple les documents RFC 3128, 4459 et 4963 de l'IETF) que le recours à la fragmentation est source de nombreux problèmes, et doit être évité. En effet, il en résulte notamment :

- une perte d'efficacité en bande passante (fragments de quelques octets utiles),
- un risque de dé-séquencement des fragments,
- une difficulté à traverser les NAT (initiales des mots anglais « *Network Address Translator* » signifiant « Traducteur d'Adresse Réseau ») et les pare-feux (« *firewalls* » en anglais), qui imposent un réassemblage,
- une obligation de retransmettre tous les fragments en cas de perte d'un seul fragment, et
- un risque d'attaques lors du réassemblage des fragments (cf. https://en.wikipedia.org/wiki/IP fragmentation attack).

Aussi différentes techniques ont elles vu le jour pour éviter d'avoir à recourir à la fragmentation. L'une de ces techniques consiste à fractionner les paquets de données trop longs dans la couche de transport (couche 4 du modèle OSI) ; les morceaux résultant de ce fractionnement sont appelés « segments » si le protocole de transport est TCP (initiales des mots anglais « *Transmission Control Protocol* » signifiant « Protocole de Contrôle de Transmission »), ou « *chunks* » si le protocole de transport est SCTP (initiales des mots anglais « *Stream Control Transmission Protocol* » signifiant « Protocole de Transmission avec Contrôle de Flux »). Ces morceaux ont une longueur adaptée à la MTU sur le chemin de transmission. On notera à cet égard que les documents RFC 1191, RFC 1181 et RFC 4821 expliquent comment on peut déterminer la MTU dans le cas de protocoles connectés tels que TCP et SCTP.

En revanche, lorsqu'une communication utilise un mode de transport non-connecté, tel que le protocole UDP (initiales des mots anglais « *User Datagram Protocol* » signifiant « Protocole de Datagramme Utilisateur »), on ne sait pas fractionner un paquet de données dans la couche de transport. Cela est fâcheux car le protocole UDP (en particulier) est très souvent utilisé dans les réseaux IP actuels.

La présente invention concerne donc, selon un premier aspect, un procédé de fractionnement de messages applicatifs dans un réseau IP (Internet Protocol), comprenant les étapes suivantes :

> a) un nœud du réseau IP, dit premier nœud, reçoit un message devant être transmis à un autre nœud du réseau IP, dit second nœud,
> b) ledit premier nœud compare la longueur dudit message avec la taille maximum de transmission MTU (Maximum Transmission Unit) caractérisant le chemin entre ledit premier nœud et ledit second nœud,
> et, si ladite longueur est supérieure à la MTU,
> c) le premier nœud fractionne le message en au moins deux segments, et insère chaque segment respectif dans un paquet de données respectif de longueur inférieure ou égale à la MTU,
> d) le premier nœud transmet lesdits paquets de données au second nœud, et
> e) le second nœud assemble lesdits segments de manière à reconstituer ledit message.

Ledit procédé est remarquable en ce que, ledit message étant un message applicatif :

- lors de ladite étape c), le premier nœud insère dans chacun desdits paquets de données une information dite de positionnement précisant la position relative dans le message du segment inséré dans ce paquet de données, et
- lors de ladite étape e), le second nœud reconstitue le message à l'aide desdites informations de positionnement.

Ainsi, selon l'invention, lorsqu'un message applicatif est trop long, on le fractionne *dans la couche applicative* (couche 7 du modèle OSI) ; plus précisément, chaque morceau de message ainsi obtenu, que l'on appellera « segment », est encapsulé dans un paquet de données de longueur compatible avec la MTU. Le fractionnement de messages conformément à l'invention sera appelé « segmentation » ci-après.

Grâce à ces dispositions, pour chaque chemin considéré entre deux nœuds selon l'invention, on pourra utiliser au mieux les capacités disponibles, tout en s'assurant qu'aucune partie du message ne sera perdue. Avantageusement, le procédé de fractionnement selon l'invention est en particulier applicable aux communications utilisant un mode de transport non-connecté, tel que le protocole UDP.

Selon des caractéristiques particulières, chacun desdits paquets de données comprend l'ensemble des informations obligatoires dans le cadre de l'application informatique régissant ledit message.

Grâce à ces dispositions, lesdits paquets de données sont entièrement conformes aux normes régissant ladite application informatique.

Selon d'autres caractéristiques particulières, chacun desdits paquets de données comprend :

- des informations de routage limitées aux informations nécessaires au routage du paquet de données vers ledit second nœud, et
- un champ dédié contenant un identifiant dudit message.

Grâce à ces dispositions, on réduit la place occupée par les informations de routage dans lesdits paquets de données, ce qui permet d'augmenter la longueur desdits segments, et donc de réduire potentiellement le nombre de paquets de données nécessaires pour transmettre l'intégralité du message applicatif.

On notera que les messages fractionnés selon la présente invention peuvent être régis par toutes sortes d'applications informatiques. Cette application informatique peut notamment consister en un protocole de l'IETF tel que HTTP (HyperText Transfer Protocol), MGCP (Media Gateway Control Protocol), ou SMTP (Simple Mail Transfer Protocol).

Selon des caractéristiques particulières, l'application informatique régissant ledit message est le protocole SIP mentionné ci-dessus.

En effet, le procédé de fractionnement selon l'invention est avantageusement applicable aux messages conformes au protocole SIP, qui est un utilisateur historique du protocole de transport UDP, notamment pour les chemins vers les clients utilisateurs.

Selon un deuxième aspect, l'invention concerne divers dispositifs.

Elle concerne ainsi, premièrement, un nœud d'un réseau IP, dit premier nœud, comprenant des moyens pour, suite à la réception d'un message devant être transmis à un autre nœud du réseau IP, dit second nœud :

- comparer la longueur dudit message avec la taille maximum de transmission MTU (Maximum Transmission Unit) caractérisant le chemin entre ledit premier nœud et ledit second nœud,
- fractionner le message en au moins deux segments,
- insérer chaque segment respectif dans un paquet de données respectif de longueur inférieure ou égale à la MTU, et
- transmettre lesdits paquets de données au second nœud.

Ledit premier nœud est remarquable en ce que, ledit message étant un message applicatif, ledit premier nœud comprend en outre des moyens pour insérer dans chaque paquet de données une information dite de positionnement précisant la position relative dans le message du segment inséré dans ce paquet de données.

Selon des caractéristiques particulières, chacun desdits paquets de données comprend l'ensemble des informations obligatoires dans le cadre de l'application informatique régissant ledit message.

Selon d'autres caractéristiques particulières, chacun desdits paquets de données comprend :

- des informations de routage limitées aux informations nécessaires au routage du paquet de données vers ledit second nœud, et
- un champ dédié contenant un identifiant dudit message.

L'invention concerne aussi, deuxièmement, un nœud d'un réseau IP, dit second nœud, comprenant des moyens pour :

- recevoir des paquets de données, et
- extraire de chaque paquet de données un segment de message.

Ledit second nœud est remarquable en ce que, ledit message étant un message applicatif, le second nœud comprend en outre des moyens pour :

- prendre en compte, dans chacun desdits paquets de données, une information dite de positionnement précisant la position relative dans le message du segment extrait de ce paquet de données, et
- utiliser lesdites informations de positionnement pour assembler les segments d'un même message.

Selon des caractéristiques particulières, ledit premier nœud et ledit second nœud sont actifs au niveau SIP.

Selon d'autres caractéristiques particulières, un nœud IP tel que décrit succinctement ci-dessus comprend des moyens pour transmettre à un autre nœud IP la taille maximum de transmission MTU caractérisant le chemin entre ces deux nœuds.

Grâce à ces dispositions, on évite un double apprentissage de la même information, à savoir la MTU caractérisant le chemin entre ces deux nœuds.

Les avantages offerts par ces nœuds sont essentiellement les mêmes que ceux offerts par les procédés corrélatifs succinctement exposés ci-dessus.

On notera qu'il est possible de réaliser ces nœuds dans le contexte d'instructions logicielles et/ou dans le contexte de circuits électroniques. On notera également qu'un nœud de réseau IP peut comprendre à la fois les moyens de « premier nœud » et les moyens de « second nœud » selon l'invention.

Selon un troisième aspect, l'invention concerne un système de communication de messages applicatifs dans un réseau IP, comprenant au moins un premier nœud tel que décrit succinctement ci-dessus et au moins un second nœud tel que décrit succinctement ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de fractionnement succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs.

On va décrire un mode de réalisation de l'invention dans lequel l'application informatique régissant les messages échangés dans une communication est le protocole de contrôle SIP. Dans ce mode de réalisation, le format d'un paquet de données encapsulant un segment de message sera appelé « pseudo-méthode SEGMENT ». On notera que la pseudo-méthode SEGMENT n'est pas à proprement parler une « méthode » au sens du protocole SIP, mais une extension du protocole SIP applicable spécifiquement au procédé de fractionnement selon l'invention. C'est pourquoi on parle de « pseudo »-méthode, et c'est pourquoi il est également possible de redéfinir les en-têtes (« *headers* » en anglais) de paquets de données dans le cadre de cette pseudo-méthode.

La segmentation selon la pseudo-méthode SEGMENT sera mise en œuvre de préférence sur chaque « hop SIP » du réseau IP considéré. On appelle « hop SIP » le chemin entre deux nœuds de réseau actifs au niveau SIP. Un nœud actif au niveau SIP est caractérisé en ce qu'il génère une requête ou une réponse SIP, ou bien insère/retire un en-tête Via dans le message SIP en cours de traitement, comme le font communément les UAC (User Agent Client), UAS (User Agent Server), serveurs mandataires (« *proxy* » en anglais) ou B2BUA (Back-to-Back User Agent) du protocole SIP. En particulier, un nœud actif au niveau SIP génère ou décrémente l'en-tête « Max-Forward » dans une requête. La pseudo-méthode SEGMENT s'applique à tout nœud actif au niveau SIP, quel que soit le contexte d'usage (par exemple, réseau IMS, WebRTC, solutions VoIP non normalisées, ou réseaux privés).

La valeur de la MTU, notée SIP_PATH_MTU_D, sera déterminée de préférence pour chaque « hop SIP », et mémorisée dans les nœuds actifs pour chaque chemin. En effet, à chaque « hop SIP » un protocole de transport différent (tel que TCP, UDP, ou SCT) peut être utilisé, et c'est donc bien « hop SIP » par « hop SIP » que la MTU doit être déterminée.

On va commencer par expliquer comment un nœud SIP actif peut déterminer la valeur de la MTU pour un « hop SIP » dont ce nœud est un point d'extrémité. On notera à cet égard que le document RFC 4821, mentionné ci-dessus, indique (cf. Sections 9 et 10.4) que la détermination de la MTU dans le cas des protocoles de transport non-connectés doit être réalisée au niveau applicatif, et ce, au moyen d'un mécanisme consistant à générer des paquets de test de longueur variable et à observer si ces paquets de test sont reçus ou perdus. Mais les indications du document RFC 4821 sont générales ; on va décrire à présent de manière détaillée comment un tel mécanisme peut être mis en œuvre pour une communication selon le protocole SIP.

La procédure proposée pour l'acquisition du SIP_PATH_MTU_D sur un « hop SIP » donné est fondée sur l'émission d'une requête SIP d'apprentissage, qui pourra être par exemple un message OPTIONS (mais n'importe quelle autre requête peut convenir), dont on fera varier la longueur. De nombreuses variantes existent pour faire varier la longueur d'une requête SIP ; on peut par exemple utiliser un corps de message (*body*) de longueur variable, ou un en-tête (par exemple, un en-tête « User-Agent ») de longueur variable.

Le nœud SIP utilise les automates de transaction normalisés du protocole SIP pour transmettre ou retransmettre les requêtes d'apprentissage. Voici un exemple d'une telle requête :

```
OPTIONS sip:client@NetworkFromOperator.com SIP/2.0
Call-ID: eA6e9NTaAA@10.29.67.130
CSeq: 1 OPTIONS
From: <sip:pcscf@operator.com>;tag=eA6e9NTbAA
To: <sip:client@NetworkFromOperator.com >
Via: SIP/2.0/UDP 10.29.67.130:5060;
branch=z9hG4bKf94075096
Max-Forwards: 1
Contact: <sip:10.29.67.130:5060>
Content-Type: application/probe
Content-Length: [testMTU] < suite quelconque de caractères de longueur [testMTU] >
```

On notera que la requête OPTIONS ci-dessus comprend un en-tête « Max-Forwards » valorisé à 1, ce qui permet de cibler directement le prochain « hop SIP ».

Le nœud SIP ayant émis le message d'apprentissage se met ensuite à l'écoute d'une réponse de la part d'un correspondant. Voici un exemple de réponse :

```
SIP/2.0 200 OK
Via: SIP/2.0/UDP 80.12.197.184:5060;
branch= z9hG4bKf94075096
Call-ID: eA6e9NTaAA@10.29.67.130
CSeq: 1 OPTIONS
From: <sip:client@NetworkFromOperator.com >; tag=eA6e9NTbAA
To: <sip:pcscf@operator.com>;tag=rp7e9NTdAA
Contact: <sip:10.29.67.130:5060>
Content-Length: 0
```

Dans l'exemple ci-dessus, l'émetteur du message d'apprentissage reçoit une réponse de type SIP 200 OK, mais n'importe quelle réponse SIP (par exemple, « 480 Temporarily unavailable ») peut convenir pour les besoins de la procédure d'apprentissage.

Dans ces conditions :

- si une réponse est reçue, c'est que le message d'apprentissage est parvenu à destination ; par conséquent, la taille maximum des messages acceptée sur le chemin vers ce correspondant est au moins égale à celle dudit message d'apprentissage ;
- si en revanche aucun message n'est reçu en réponse, c'est que le message d'apprentissage a été perdu, et donc que sa longueur était trop grande.

A l'issue de la procédure d'apprentissage, la valeur (ou une estimation de la valeur) de SIP_PATH_MTU_D est ainsi disponible dans l'application informatique SIP.

Pour un nœud de réseau servant d'entité de raccordement entre un réseau d'accès et un cœur de réseau (tel qu'un serveur P-CSCF dans un réseau IMS), la procédure de découverte de la MTU entre cette entité de raccordement et un client se déroulera de préférence juste après l'enregistrement initial de ce client, et la mise en œuvre de cette procédure permettra de stocker la MTU dans le contexte d'enregistrement associé à l'adresse de contact du client. Le SIP_PATH_MTU_D restera ainsi valide tout au long de l'enregistrement du client, et pourra être recalculé lors d'un nouvel enregistrement initial, de façon à s'adapter à une éventuelle modification de ce chemin du réseau.

Le stockage du SIP_PATH_MTU_D dans le contexte d'enregistrement de manière permet ensuite au client de mettre en œuvre l'invention avec tout protocole de transport admissible. Le client pourra par exemple transmettre des messages après avoir basculé d'UDP vers TCP lorsque la longueur de ces messages est supérieure à (SIP_PATH_MTU_D - 200 octets), comme requis par le document RFC 3261 mentionné ci-dessus.

Cette information peut être également diffusée à un correspondant du client, qui pourra alors avantageusement la stocker dans son propre contexte d'enregistrement afin de l'exploiter de la même façon. Cette information peut par exemple être communiquée dans un en-tête ou le contenu d'un message, par exemple un message d'apprentissage de la MTU.

Voici par exemple comment un nœud actif au niveau SIP peut transmettre la valeur de SIP_PATH_MTU_D à un correspondant en tant que paramètre d'un en-tête tel que « From » ou « Via », en utilisant un « generic-param » SIP (la notion de « generic-param » est définie dans le document RFC 3261) :

From:<sip:client@NetworkFromOperator.com>

tag=LC7e9NTgAA;SIP_PATH_MTU_D =5000

Si le nœud actif au niveau SIP est un nœud de cœur de réseau IMS, tel qu'un AS (initiales des mots anglais « *Application Server* » signifiant « Serveur d'Applications »), un I-CSCF (initiales des mots anglais « *Interrogating-Call Server Control Function* » signifiant « Fonction de Commande de Session d'Appel Interrogatrice »), un S-CSCF (initiales des mots anglais « *Serving-Call Server Control Function* » signifiant « Fonction de Commande de Session d'Appel Serveuse »), ou un BGCF (initiales des mots anglais « *Breakout Gateway Control Function* » signifiant « Fonction de Commande de Passerelle de Sortie »), la procédure d'apprentissage sera mise en œuvre lorsque le « hop SIP » apparaîtra pour la première fois dans une route. Par « première fois », on entend le fait que ce « hop SIP » n'est pas présent dans les tables mémorisées localement. Afin de ne pas risquer une mémorisation sans limite, l'indication de la MTU pour un « hop SIP » non utilisé pendant une durée prédéterminée sera de préférence supprimée.

Le procédé de fractionnement selon l'invention, dans le présent mode de réalisation, comprend les étapes suivantes.

Selon une première étape, un nœud IP, dit premier nœud, reçoit un message SIP (requête ou réponse), et constate qu'il doit transmettre ce message à un autre nœud IP, dit second nœud. On suppose que ce premier nœud a précédemment découvert la MTU caractérisant le chemin entre le premier nœud et le second nœud (en utilisant, par exemple, la procédure décrite ci-dessus), ou a obtenu précédemment la valeur de la MTU de la part du second nœud (en utilisant, par exemple, la procédure également décrite ci-dessus).

Selon une deuxième étape, le premier nœud compare la longueur du message reçu avec cette MTU. On va supposer à présent que la longueur du message est supérieure à la MTU.

Selon une troisième étape, le premier nœud extrait du message SIP reçu l'ensemble des informations SIP obligatoires (telles que spécifiées dans la Table 2 du chapitre 20 du document RFC 3261), ainsi que celles nécessaires au routage du message vers son destinataire ; ces informations comprennent notamment les en-têtes « Via », « From », « To », « Cseq », « Call-ID », « Max-Forwards », « Route », « Record-Route », « Contact », ainsi que la première ligne du message (« Request URI »).

Le premier nœud fractionne alors le contenu du message de manière à obtenir plusieurs segments. Chaque segment respectif sera transporté dans un corps de message (« *body* » en anglais) d'une pseudo-méthode SEGMENT respective de longueur inférieure ou égale à la MTU.

En variante dite « optimisée », seules les informations nécessaires au routage de la pseudo-méthode SEGMENT vers le second nœud (par opposition aux informations de routage concernant plusieurs « hop SIP ») sont recopiées dans les en-têtes de la pseudo-méthode SEGMENT ; on fait ainsi l'économie, notamment, des en-têtes Record-Route, Via, From, Call-ID, CSeq, Max-Forwards, et Contact. Toutefois, dans le cadre de cette variante, le premier nœud inclut en outre dans la pseudo-méthode SEGMENT un en-tête, dit en-tête d'identification, contenant un identifiant (généré aléatoirement, par exemple) caractéristique du message à transmettre, et que l'on appellera « SIP-PDU-Id ». ; cet identifiant SIP-PDU-Id permet donc d'identifier toutes les pseudo-méthodes SEGMENT relatives au même message SIP. Grâce à ces dispositions, on réduit la place occupée par les informations de routage dans les pseudo-méthodes SEGMENT, ce qui permet d'augmenter la longueur desdits segments, et donc de réduire potentiellement le nombre de pseudo-méthodes SEGMENT nécessaires pour transmettre l'intégralité du message. On notera toutefois que ce résultat est obtenu au prix d'un comportement non-standard vis-à-vis des normes SIP.

Par ailleurs, quelle que soit la variante, le premier nœud inclut dans chaque pseudo-méthode SEGMENT un en-tête dit de positionnement (que l'on appellera « Segment-Size ») précisant la position relative dans le message à transmettre du segment encapsulé dans cette pseudo-méthode ; cet en-tête de positionnement permettra au second nœud de reconstituer ce message, en particulier si les segments sont dé-séquencés pendant le transport. Ainsi, dans les exemples fournis ci-dessous, l'en-tête Segment-Size spécifie, dans chaque pseudo-méthode SEGMENT, les numéros d'ordre des octets du message à transmettre encapsulés dans cette pseudo-méthode, ainsi que le nombre total d'octets de ce message.

Selon une quatrième étape, le premier nœud transmet au second nœud les pseudo-méthodes SEGMENT ainsi obtenues.

Enfin, selon une cinquième étape, le second nœud reconstitue le message grâce à l'information de positionnement contenue dans l'en-tête Segment-Size, ainsi que, dans le cas de la variante optimisée, grâce à l'information contenue dans l'en-tête SIP-PDU-Id (au besoin). Le protocole SIP effectue alors, optionnellement, des contrôles sur le message reconstitué (validité, destination, origine, sémantique, et ainsi de suite), avant de le transmettre vers le « hop SIP » suivant si le message n'a pas atteint sa destination finale.

On va illustrer le présent mode de réalisation avec quelques exemples numériques.

Supposons, selon un premier exemple, qu'un premier nœud doive transmettre à un second nœud une requête SIP OPTIONS, de longueur totale 1700 octets (à savoir, 200 octets d'en-têtes, et 1500 octets de corps de message), libellée comme suit :

OPTIONS sip:client@NetworkFromOperator.com SIP/2.0

Call-ID: eA6e9NTaAA@10.29.67.130

CSeq: 1 OPTIONS

Route: <sip:194.23.56.14 5067>

From: <sip:pcscf@operator.com>;tag=eA6e9NTbAA

To: <sip:client@NetworkFromOperator.com >

Via: SIP/2.0/UDP 10.29.67.130:5060;

branch=z9hG4bKf94075096aaba6a952d7a9a630c70d9b333832

Max-Forwards: 1

Contact: <sip:10.29.67.130:5060>

Content-Type: application/probe

Content-Length: 1500

< corps de message >

Si la valeur de la MTU sur le chemin est 1000 octets, il faudra utiliser (au moins) deux pseudo-méthodes SEGMENT. Dans la variante dite « optimisée », la transmission du message comprend alors une première pseudo-méthode, dont les en-têtes occupent (disons) 100 octets et de longueur totale 1000 octets, libellée comme suit :

SEGMENT sip:client@NetworkFromOperator.com SIP/2.0
Route: <sip:194.23.56.14 5067>
To: sip:client@NetworkFromOperator.com
Segment-Size: 1-900 / 1700
SIP-PDU-Id: 456@#Th7j8k563ty7K

```
OPTIONS sip:client@NetworkFromOperator.com SIP/2.0Call-ID: eA6e9NTaAA@10.29.67.130
CSeq: 1 OPTIONS
From: <sip:pcscf@operator.com>;tag=eA6e9NTbAA
To: <sip:client@NetworkFromOperator.com >
Via: SIP/2.0/UDP 10.29.67.130:5060;
branch=z9hG4bKf94075096aaba6a952d7a9a630c70d9b333832
Max-Forwards: 1
Contact: <sip:10.29.67.130:5060>
Content-Type: application/something
Content-Length: 1500
```

< $N_1$ premiers octets du contenu de la méthode OPTIONS >
où, puisque la MTU vaut 1000 octets :

$$N_1 = 1000 - 100 \text{ (en-têtes de SEGMENT)} - 200 \text{ (en-têtes de OPTIONS)}$$

$$= 700 \text{ octets.}$$

Toujours dans la variante dite « optimisée », la transmission du message comprend en outre une seconde pseudo-méthode, dont les en-têtes occupent (disons) 100 octets et de longueur totale 1000 octets, libellée comme suit :

```
SEGMENT sip:client@NetworkFromOperator.com SIP/2.0
Route: <sip:194.23.56.14 5067>
To: sip:client@NetworkFromOperator.com
Segment-Size: 901-1700 / 1700
SIP-PDU-Id: 456@#Th7j8k563ty7K
```

< $N_2$ derniers octets du contenu de la méthode OPTIONS >
où, puisque le contenu de la méthode OPTIONS (c'est-à-dire le corps du message) comprend 1500 octets :

$$N_2 = 1500 - N_1 = 800 \text{ octets.}$$

Selon un deuxième exemple, supposons qu'un correspondant souhaite transmettre une réponse SIP 200 OK, de longueur totale 1400 octets (à savoir, 200 octets d'en-têtes, et 1200 octets de corps de message), libellée comme suit :

```
SIP/2.0 200 OK
Via: SIP/2.0/UDP 80.12.197.184:5060;
branch=z9hG4bK_IMSCA0720430.000_33323c28bbb663570d434d94f66752e3;
Call-ID: LC7e9NTfAA@10.29.67.132
CSeq: 1 OPTIONS
From: <sip:client@NetworkFromOperator.com >;tag=LC7e9NTgAA
To: <sip:pcscf@operator.com>;tag=rp7e9NTdAA
Contact: <sip:10.29.67.130:5060>
Content-Type: application/ somethingElse
Content-Length: 1200
```

< corps de message >
Si la valeur de la MTU sur le chemin est 1000 octets, il faudra utiliser (au moins) deux pseudo-méthodes SEGMENT. Dans la variante dite « optimisée », la transmission du message comprend alors une première pseudo-méthode, dont les en-têtes occupent (disons) 100 octets et de longueur totale 1000 octets, libellée comme suit :

```
SEGMENT 200 OK
Via: SIP/2.0/UDP 80.12.197.184:5060;
branch=z9hG4bK_IMSCA0720430.000_33323c28bbb663570d434d94f66752e3;
Segment-Size: 1-900 / 1400
SIP-PDU-Id: fsdRET6hrtL45
SIP/2.0 200 OK
```

Via: SIP/2.0/UDP 80.12.197.184:5060;
branch=z9hG4bK_IMSCA0720430.000_33323c28bbb663570d434d94f66752e3;
Call-ID: LC7e9NTfAA@10.29.67.132
CSeq: 1 OPTIONS
From: <sip:client@NetworkFromOperator.com >;tag=LC7e9NTgAA To: <sip:pcscf@operator.com>;tag=rp7e9NTdAA
Contact: <sip:10.29.67.130:5060>
Content-Type: application/somethingElse
Content-Length: 1200

< $M_1$ premiers octets du contenu de la méthode SIP 200 OK >
où, puisque la MTU vaut 1000 octets :

$$M_1 = 1000 - 100 \text{ (en-têtes de SEGMENT)} - 200 \text{ (en-têtes de SIP 200 OK)}$$

$$= 700 \text{ octets.}$$

Toujours dans la variante dite « optimisée », la transmission du message comprend en outre une seconde pseudo-méthode, dont les en-têtes occupent (disons) 100 octets et de longueur totale 1000 octets, libellée comme suit :

SEGMENT 200 OK
Via: SIP/2.0/UDP 80.12.197.184:5060;
branch=z9hG4bK_IMSCA0720430.000_33323c28bbb663570d434d94f66752e3;
Segment-Size: 901-1400 / 1400
SIP-PDU-Id: fsdRET6hrtL45

< $M_2$ derniers octets du contenu de la méthode SIP 200 OK >
où, puisque le contenu de la méthode SIP 200 OK (c'est-à-dire le corps du message) comprend 1200 octets :

$$M_2 = 1200 - M_1 = 500 \text{ octets.}$$

On notera que la première ligne, ainsi que les en-têtes de routage, des pseudo-méthodes SEGMENT sont différents pour l'encapsulation d'une requête SIP par comparaison avec une réponse SIP, car le routage des requêtes et des réponses selon le protocole SIP n'exploite pas les mêmes informations.

En variante, on peut s'abstenir de distinguer les requêtes des réponses dans la pseudo-méthode SEGMENT, auquel cas seuls les en-têtes « Segment-Size » et « SIP-PDU-Id » seront présents. La première ligne (Request-URI) de la pseudo-méthode SEGMENT contient alors l'adresse de contact du prochain nœud SIP.

La compatibilité d'un nœud du réseau IP avec la présente invention peut être commodément indiquée dans l'en-tête SIP « Allow » (connu en soi). Aucun mécanisme nouveau de négociation n'est nécessaire à cet effet : si un nœud actif au niveau SIP veut découvrir la compatibilité d'un correspondant avec la pseudo-méthode SEGMENT sur un « hop SIP », il lui suffit d'émettre une méthode OPTIONS avec l'en-tête « Max-Fowards » valorisé à 1 ; si la réponse du correspondant inclut un en-tête SIP « Allow » mentionnant la pseudo-méthode SEGMENT (en plus des méthodes SIP acceptées par ce nœud), c'est que le correspondant est compatible avec cette pseudo-méthode.

De manière générale, la présente invention peut être mise en œuvre au sein des nœuds d'un réseau IP, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de fractionnement selon l'invention.

En effet, l'invention vise aussi un programme d'ordinateur téléchargeable depuis un réseau de communication comprenant des instructions pour l'exécution des étapes d'un procédé de fractionnement selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de fractionnement selon l'invention.

## Revendications

1.  Procédé de fractionnement de messages applicatifs dans un réseau IP, Internet Protocol, comprenant les étapes suivantes :

    a) un nœud du réseau IP, dit premier nœud, reçoit un message devant être transmis à un autre nœud du réseau IP, dit second nœud,
    b) ledit premier nœud compare la longueur dudit message avec la taille maximum de transmission MTU, Maximum Transmission Unit, caractérisant le chemin entre ledit premier nœud et ledit second nœud,
    et, si ladite longueur est supérieure à la MTU,
    c) le premier nœud fractionne le message en au moins deux segments, et insère chaque segment respectif dans un paquet de données respectif de longueur inférieure ou égale à la MTU,
    d) le premier nœud transmet lesdits paquets de données au second nœud, et
    e) le second nœud assemble lesdits segments de manière à reconstituer ledit message,

    **caractérisé en ce que**, ledit message étant un message applicatif :

    - lors de ladite étape c), le premier nœud insère dans chacun desdits paquets de données une information dite de positionnement précisant la position relative dans le message du segment inséré dans ce paquet de données, et
    - lors de ladite étape e), le second nœud reconstitue le message à l'aide desdites informations de positionnement.

2.  Procédé de fractionnement selon la revendication 1, **caractérisé en ce que** chacun desdits paquets de données comprend l'ensemble des informations obligatoires dans le cadre de l'application informatique régissant ledit message.

3.  Procédé de fractionnement selon la revendication 1, **caractérisé en ce que** chacun desdits paquets de données comprend :

    - des informations de routage limitées aux informations nécessaires au routage du paquet de données vers ledit second nœud, et
    - un champ dédié contenant un identifiant dudit message.

4.  Procédé de fractionnement selon l'une quelconque des revendications 1 à 3, **caractérisé en ce que** l'application informatique régissant ledit message est le protocole de contrôle de session SIP, Session Initiation Protocol.

5.  Nœud d'un réseau IP, Internet Protocol, dit premier nœud, comprenant des moyens pour, suite à la réception d'un message devant être transmis à un autre nœud du réseau IP, dit second nœud :

    - comparer la longueur dudit message avec la taille maximum de transmission MTU, Maximum Transmission Unit, caractérisant le chemin entre ledit premier nœud et ledit second nœud,
    - fractionner le message en au moins deux segments,
    - insérer chaque segment respectif dans un paquet de données respectif de longueur inférieure ou égale à la MTU, et
- transmettre lesdits paquets de données au second nœud,

**caractérisé en ce que**, ledit message étant un message applicatif, ledit premier nœud comprend en outre des moyens pour insérer dans chaque paquet de données une information dite de positionnement précisant la position relative dans le message du segment inséré dans ce paquet de données.

6. Nœud d'un réseau IP selon la revendication 5, **caractérisé en ce que** chacun desdits paquets de données comprend l'ensemble des informations obligatoires dans le cadre de l'application informatique régissant ledit message.

7. Nœud d'un réseau IP selon la revendication 5, **caractérisé en ce que** chacun desdits paquets de données comprend :

- des informations de routage limitées aux informations nécessaires au routage du paquet de données vers ledit second nœud, et
- un champ dédié contenant un identifiant dudit message.

8. Nœud d'un réseau IP, Internet Protocol, dit second nœud, comprenant des moyens pour :

- recevoir des paquets de données, et
- extraire de chaque paquet de données un segment de message,

**caractérisé en ce que**, ledit message étant un message applicatif, ledit second nœud comprend en outre des moyens pour :

- prendre en compte, dans chacun desdits paquets de données, une information dite de positionnement précisant la position relative dans le message du segment extrait de ce paquet de données, et
- utiliser lesdites informations de positionnement pour assembler les segments d'un même message.

9. Nœud d'un réseau IP selon l'une quelconque des revendications 5 à 8, **caractérisé en ce qu'**il est actif au niveau SIP, Session Initiation Protocol.

10. Nœud d'un réseau IP selon l'une quelconque des revendications 5 à 9, **caractérisé en ce qu'**il comprend des moyens pour transmettre à un autre nœud IP la taille maximum de transmission MTU, Maximum Transmission Unit caractérisant le chemin entre ces deux nœuds.

11. Système de communication de messages applicatifs dans un réseau IP, Internet Protocol, comprenant :

- au moins un premier nœud selon l'une quelconque des revendications 5 à 7, et
- au moins un second nœud selon la revendication 8.

12. Moyen de stockage de données inamovible, ou partiellement ou totalement amovible, comportant des instructions de code de programme informatique pour l'exécution des étapes d'un procédé de fractionnement selon l'une quelconque des revendications 1 à 4.

13. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé de fractionnement selon l'une quelconque des revendications 1 à 4, lorsqu'il est exécuté sur un ordinateur.

**Patentansprüche**

1. Verfahren zum Aufteilen von Anwendungsmeldungen in einem IP, Internetprotokoll, -Netzwerk, das die folgenden Schritte beinhaltet:

a) Empfangen, durch einen Knoten des IP-Netzwerks, als erster Knoten bezeichnet, einer Meldung, die an einen anderen Knoten des IP-Netzwerks, als zweiter Knoten bezeichnet, übertragen werden soll,

b) Vergleichen, durch den ersten Knoten, der Länge der Meldung mit der maximalen Übertragungsgröße MTU, Maximum Transmission Unit, die den Weg zwischen dem ersten Knoten und dem zweiten Knoten kennzeichnet, und, wenn die Länge größer als die MTU ist,

c) durch den ersten Knoten, Aufteilen der Meldung in mindestens zwei Segmente und Einfügen jedes jeweiligen Segments in ein jeweiliges Datenpaket mit einer Länge kleiner als oder gleich der MTU,

d) Übertragen, durch den ersten Knoten, der Datenpakete an den zweiten Knoten, und

e) Zusammensetzen, durch den zweiten Knoten, der Segmente, um die Meldung wiederherzustellen,

**dadurch gekennzeichnet, dass**, da die Meldung eine Anwendungsmeldung ist:

- während des Schritts c) der erste Knoten in jedes der Datenpakete eine Information als Positionierungsinformation bezeichnet, einfügt, die die relative Position des in dieses Datenpaket eingefügten Segments innerhalb der Meldung angibt, und
- während des Schritts e) der zweite Knoten die Meldung mit Hilfe der Positionierungsinformationen wiederherstellt.

2. Aufteilungsverfahren nach Anspruch 1, **dadurch gekennzeichnet, dass** jedes der Datenpakete alle Informationen, die im Rahmen der IT-Anwendung, die die Meldung regelt, obligatorisch sind, beinhaltet.

3. Aufteilungsverfahren nach Anspruch 1, **dadurch gekennzeichnet, dass** jedes der Datenpakete Folgendes beinhaltet:

- Routinginformationen, die auf die zum Routen des Datenpakets zu dem zweiten Knoten notwendigen Informationen beschränkt sind, und
- ein dediziertes Feld das eine Kennung der Meldung enthält.

4. Aufteilungsverfahren nach einem der Ansprüche 1 bis 3, **dadurch gekennzeichnet, dass** die IT-Anwendung, die die Meldung regelt, das Sitzungssteuerungsprotokoll SIP, Session Initiation Protocol, ist.

5. Knoten eines IP, Internetprotokoll, -Netzwerks, als erster Knoten bezeichnet, der Mittel beinhaltet, um folgend auf das Empfangen einer Meldung, die an einen anderen Knoten des IP-Netzwerks, als zweiter Knoten bezeichnet, übertragen werden soll:

- die Länge der Meldung mit der maximalen Übertragungsgröße MTU, Maximum Transmission Unit, die den Weg zwischen dem ersten Knoten und dem zweiten Knoten kennzeichnet, zu vergleichen,
- die Meldung in mindestens zwei Segmente aufzuteilen,
- jedes jeweilige Segment in ein jeweiliges Datenpaket mit einer Länge kleiner als oder gleich der MTU einzufügen und
- die Datenpakete an den zweiten Knoten zu übertragen, **dadurch gekennzeichnet, dass**, da die Meldung eine Anwendungsmeldung ist, der erste Knoten ferner Mittel zum Einfügen, in jedes Datenpaket einer Information als Positionierungsinformation bezeichnet, beinhaltet, die die relative Position des in dieses Datenpaket eingefügten Segments innerhalb der Meldung angibt.

6. Knoten eines IP-Netzwerks nach Anspruch 5, **dadurch gekennzeichnet, dass** jedes der Datenpakete alle Informationen, die im Rahmen der IT-Anwendung, die die Meldung regelt, obligatorisch sind, beinhaltet.

7. Knoten eines IP-Netzwerks nach Anspruch 5, **dadurch gekennzeichnet, dass** jedes der Datenpakete Folgendes beinhaltet:

- Routinginformationen, die auf die zum Routen des Datenpakets zu dem zweiten Knoten notwendigen Informationen beschränkt sind, und
- ein dediziertes Feld, das eine Kennung der Meldung enthält.

8. Knoten eines IP, Internetprotokoll, -Netzwerks, als zweiter Knoten bezeichnet, der Mittel beinhaltet, um:

- Datenpakete zu empfangen und
- aus jedem Datenpaket ein Meldungssegment zu extrahieren,

**dadurch gekennzeichnet, dass**, da die Meldung eine Anwendungsmeldung ist, der zweite Knoten ferner Mittel beinhaltet, um:

- in jedem der Datenpakete eine Information als Positionierungsinformation bezeichnet, die die relative Position des extrahierten Segments dieses Datenpakets innerhalb der Meldung angibt, zu berücksichtigen und
- die Positionierungsinformationen zu verwenden, um die Segmente einer gleichen Meldung zusammenzusetzen.

9. Knoten eines IP-Netzwerks nach einem der Ansprüche 5 bis 8, **dadurch gekennzeichnet, dass** er im Bereich SIP, Session Initiation Protocol, aktiv ist.

10. Knoten eines IP-Netzwerks nach einem der Ansprüche 5 bis 9, **dadurch gekennzeichnet, dass** er Mittel zum Übertragen, an einen anderen IP-Knoten, der maximalen Übertragungsgröße MTU, Maximum Transmission Unit, die den Weg zwischen diesen zwei Knoten kennzeichnet, beinhaltet.

11. Kommunikationssystem für Anwendungsmeldungen in einem IP, Internetprotokoll, -Netzwerk, das Folgendes beinhaltet:

- mindestens einen ersten Knoten nach einem der Ansprüche 5 bis 7 und
- mindestens einen zweiten Knoten nach Anspruch 8.

12. Stationäres oder teilweise oder gänzlich mobiles Mittel zur Datenspeicherung, das IT-Programmcodeanweisungen zum Ausführen der Schritte eines Aufteilungsverfahrens nach einem der Ansprüche 1 bis 4 umfasst.

13. Computerprogramm, das aus einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Anweisungen zum Ausführen der Schritte eines Aufteilungsverfahrens nach einem der Ansprüche 1 bis 4 beinhaltet, wenn es auf einem Computer ausgeführt wird.

**Claims**

1. Method of splitting application messages in an IP, Internet Protocol, network, comprising the following steps:

a) a node of the IP network, so-called first node, receives a message that has to be transmitted to another node of the IP network, so-called second node,
b) said first node compares the length of said message with the maximum transmission size MTU, Maximum Transmission Unit, characterizing the path between said first node and said second node,
and, if said length is greater than the MTU,
c) the first node splits the message into at least two segments, and inserts each respective segment into a respective data packet of length less than or equal to the MTU,
d) the first node transmits said data packets to the second node, and
e) the second node assembles said segments so as to reconstruct said message,

**characterized in that**, said message being an application message:

- during said step c), the first node inserts into each of said data packets a so-called positioning information item specifying the relative position in the message of the segment inserted into this data packet, and
- during said step e), the second node reconstructs the message with the aid of said positioning information items.

2. Splitting method according to Claim 1, **characterized in that** each of said data packets comprises the set of information items compulsory within the framework of the computing application governing said message.

3. Splitting method according to Claim 1, **characterized in that** each of said data packets comprises:

- routing information items limited to the information items necessary for routing the data packet to said second node, and
- a dedicated field containing an identifier of said message.

**4.** Splitting method according to any one of Claims 1 to 3, **characterized in that** the computing application governing said message is the SIP, Session Initiation Protocol, session control protocol.

**5.** Node of an IP, Internet Protocol, network, so-called first node, comprising means for, subsequent to the receipt of a message that has to be transmitted to another node of the IP network, so-called second node:

- comparing the length of said message with the maximum transmission size MTU, Maximum Transmission Unit, characterizing the path between said first node and said second node,
- splitting the message into at least two segments,
- inserting each respective segment into a respective data packet of length less than or equal to the MTU, and
- transmitting said data packets to the second node,

**characterized in that**, said message being an application message, said first node furthermore comprises means for inserting into each data packet a so-called positioning information item specifying the relative position in the message of the segment inserted into this data packet.

**6.** Node of an IP network according to Claim 5, **characterized in that** each of said data packets comprises the set of information items compulsory within the framework of the computing application governing said message.

**7.** Node of an IP network according to Claim 5, **characterized in that** each of said data packets comprises:

- routing information items limited to the information items necessary for routing the data packet to said second node, and
- a dedicated field containing an identifier of said message.

**8.** Node of an IP, Internet Protocol, network, so-called second node, comprising means for:

- receiving data packets, and
- extracting a message segment from each data packet,

**characterized in that**, said message being an application message, said second node furthermore comprises means for:

- taking into account, in each of said data packets, a so-called positioning information item specifying the relative position in the message of the segment extracted from this data packet, and
- using said positioning information items to assemble the segments of one and the same message.

**9.** Node of an IP network according to any one of Claims 5 to 8, **characterized in that** it is active at the SIP, Session Initiation Protocol, level.

**10.** Node of an IP network according to any one of Claims 5 to 9, **characterized in that** it comprises means for transmitting to another IP node the maximum transmission size MTU, Maximum Transmission Unit, characterizing the path between these two nodes.

**11.** System for communicating application messages in an IP, Internet Protocol, network, comprising:

- at least one first node according to any one of Claims 5 to 7, and
- at least one second node according to Claim 8.

**12.** Irremovable, or partially or totally removable means for storing data comprising computerized program code instructions for the execution of the steps of a splitting method according to any one of Claims 1 to 4.

**13.** Computer program downloadable from a communications network and/or stored on a medium readable by computer and/or executable by a microprocessor, **characterized in that** it comprises instructions for the execution of the steps of a splitting method according to any one of Claims 1 to 4, when it is executed on a computer.

**EP 3 549 368 B1**

## RÉFÉRENCES CITÉES DANS LA DESCRIPTION

**Documents brevets cités dans la description**

- US 2016057070 A